# EUROPEAN PATENT APPLICATION

(11) **EP 3 858 878 A1**
(43) Date of publication of application: **04.08.2021**
(21) Application number: 19868026.6
(22) Date of filing: 02.09.2019
(51) Int. Cl.: C08F 236/04, B60C 1/00, C08F 212/06, C08L 9/00

(54) **MULTI-COMPONENT COPOLYMER, RUBBER COMPOSITION, RESIN COMPOSITION, TIRE, AND RESIN PRODUCT**

(30) Priority: 25.09.2018 JP 2018178803; 15.03.2019 JP 2019048265
(71) Applicant: BRIDGESTONE CORPORATION, Chuo-ku Tokyo 104-8340 (JP)
(72) Inventor: HOTTA, Aya, Tokyo 104-8340 (JP); TAKANO, Shigenaga, Tokyo 104-8340 (JP); INUTSUKA, Shoko, Tokyo 104-8340 (JP); MORISHITA, Yoshihiro, Tokyo 104-8340 (JP)
(74) Representative: Oxley, Robin John George
(86) International application number: PCT/JP2019/034468
(87) International publication number: WO 2020/066480

(57) **Abstract**

The present invention relates to a multicomponent copolymer capable of developing high durability and containing a conjugated diene unit, a non-conjugated olefin unit, and an aromatic vinyl unit, wherein the vinyl bond amount of the conjugated diene unit is 3% or more, a rubber composition and a resin composition each containing the same, a tire using the rubber composition, and a resin product using the resin composition.

## Description

### Technical Field

The present invention relates to a multicomponent copolymer, a rubber composition, a resin composition, a tire, and a resin product.

### Background Art

In general, rubber products, such as tires, conveyor belts, rubber crawlers, hoses, vibration-proofing rubbers to be used for vibration-proofing devices or seismic isolators, and seismic isolation rubbers, are required to have durability, and in order to satisfy such a requirement, rubber materials having high durability are used.

As for rubber materials having high durability, for example, PTL 1 describes that a copolymer of a conjugated diene compound and a non-conjugated olefin, in which the cis-1,4-bond content of the conjugated diene moiety and the content of the non-conjugated olefin fall within specified ranges, respectively, has good crack growth resistance and excellent weather resistance.

### Citation List

### Patent Literature

PTL 1: WO 2012/014455 A

### Summary of Invention

### Technical Problem

Now, in recent years, performances required against the aforementioned various rubber products are becoming severe more and more. Especially, with respect to the durability, such as fracture performance (in particular, tensile strength (Tb)), a more severe performance has been being demanded. But, there may be a case where the multicomponent copolymer described in the aforementioned PTL 1 is not able to sufficiently cope therewith, and it is required to be more improved from the standpoint of durability, such as fracture performance.

In view of these circumstances, the present invention has been made, and an object thereof is to provide a multicomponent copolymer capable of developing high durability, a rubber composition containing the multicomponent copolymer, a resin composition, a tire, and a resin product.

### Solution to Problem

In order to solve the aforementioned problem, the present inventors made extensive and intensive investigations. As a result, it has been found that the aforementioned problem can be solved by the inventions having the following constitutions, respectively.

1. A multicomponent copolymer containing a conjugated diene unit, a non-conjugated olefin unit, and an aromatic vinyl unit, wherein the vinyl bond amount of the conjugated diene unit is 3% or more.
2. A rubber composition containing a rubber component containing the multicomponent copolymer as set forth above in 1.
3. A resin composition containing the multicomponent copolymer as set forth above in 1.
4. A tire using the rubber composition as set forth above in 2.
5. A resin product using the resin composition as set forth above in 3.

### Advantageous Effects of Invention

In accordance with the present invention, it is possible to provide a multicomponent copolymer capable of developing high durability, a rubber composition containing the multicomponent copolymer, a resin composition, a tire, and a resin product.

### Description of Embodiments

Embodiments of the present invention (each of which will be hereinafter occasionally referred to as "present embodiment") are hereunder described in detail. In the following description, the numerical values of the upper limit and the lower limit relating to "or more", "or less", and "from A to B" regarding the description of the numerical value ranges are numerical values capable of being arbitrarily combined, and the numerical values in the section of Examples can be regarded as the foregoing upper limit and lower limit.

### (Multicomponent Copolymer)

The multicomponent copolymer of the present embodiment is one containing a conjugated diene unit, a non-conjugated olefin unit, and an aromatic vinyl unit, wherein the vinyl bond amount of the conjugated diene unit is 3% or more. As for conventional copolymers containing a conjugated diene unit and a non-conjugated olefin unit, there was room for improvement from the standpoint of durability, such as fracture performance. On the other hand, in the multicomponent copolymer of the present embodiment, by further adopting the aromatic vinyl unit, the durability can be improved, and further, the workability can be secondarily improved. In addition, by regulating the vinyl bond amount of the conjugated diene unit to 3% or more, it can be contemplated to improve the durability. As a result, it has become possible to obtain extremely high durability. The multicomponent copolymer of the present embodiment is hereunder described in detail.

The multicomponent copolymer which is used in the present embodiment is one containing a conjugated diene unit, a non-conjugated olefin unit, and an aromatic vinyl unit. In the present embodiment, the multicomponent copolymer may be composed only of a conjugated diene unit, a non-conjugated olefin unit, and an aromatic vinyl unit, and it may further contain other monomer unit. The respective units to be contained in the multicomponent copolymer which is used in the present embodiment have such characteristics that the conjugated diene unit makes it possible to vulcanize the multicomponent copolymer and improves elongation or strength as rubber; the non-conjugated olefin unit improves the durability, such as fracture performance, owing to the fact that on the occasion of being largely strained, a crystal component derived from the non-conjugated olefin unit collapses, to cause dissipation of energy; and the aromatic vinyl unit improves the workability of the multicomponent copolymer. In view of the fact that the multicomponent copolymer which is used in the present embodiment is formed through a combination of these units, in the case of being used for a rubber composition, it exhibits an excellent performance especially regarding the durability, such as fracture performance.

The conjugated diene unit is a structural unit derived from a conjugated diene compound serving as a monomer. The "conjugated diene compound" as referred to herein means a diene compound of a conjugated system.

The conjugated diene compound preferably has 4 to 8 carbon atoms. Specifically, examples of such a conjugated diene compound include 1,3-butadiene, isoprene, 1,3-pentadiene, and 2,3-dimethyl-1,3-butadiene. The conjugated diene compound may be used either alone or in combination of two or more thereof. From the viewpoint of effectively improving the durability of the rubber composition or the like using the obtained multicomponent copolymer, the conjugated diene compound serving as a monomer of the multicomponent copolymer preferably contains at least one selected from 1,3-butadiene and isoprene, and it is more preferably composed only of at least one selected from 1,3-butadiene and isoprene, and still more preferably composed only of isoprene. In addition, by using isoprene, it becomes easy to regulate the vinyl bond amount of the conjugated diene unit to 3% or more. In other words, the conjugated diene unit in the multicomponent copolymer preferably contains at least one selected from a 1,3-butadiene unit and an isoprene unit, and it is more preferably composed only of at least one selected from a 1,3-butadiene unit and an isoprene unit, and still more preferably composed only of an isoprene unit. In addition, as for such a conjugated diene unit, when combined with the other units, the durability of the rubber composition or the like using the multicomponent copolymer is readily improved, and by containing an isoprene unit, it becomes easy to regulate the vinyl bond amount of the conjugated diene unit to 3% or more.

The content of the conjugated diene unit in the multicomponent copolymer is preferably 1 mol% or more, and more preferably 3 mol% or more, and an upper limit thereof is preferably 50 mol% or less, more preferably 40 mol% or less, still more preferably 30 mol% or less, yet still more preferably 15 mol% or less, especially preferably 10 mol% or less, and more especially preferably 5 mol% or less. When the content of the conjugated diene unit is 1 mol% or more, the rubber composition or the like with excellent elongation is obtained, and when it is 50 mol% or less, the weather resistance is improved, and the durability of the rubber composition or the like using the multicomponent copolymer is readily improved through a combination with the other units. In addition, the content of the conjugated diene unit is preferably in a range of 1 to 50 mol%, more preferably in a range of 3 to 40 mol%, and still more preferably in a range of 3 to 30 mol% relative to the whole of the multicomponent copolymer.

The non-conjugated olefin unit is a structural unit derived from a non-conjugated olefin compound serving as a monomer. The "non-conjugated olefin compound" as referred to herein means an aliphatic unsaturated hydrocarbon which is a compound having at least one carbon-carbon double bond.

The non-conjugated olefin compound preferably has 2 to 10 carbon atoms. Specifically, examples thereof include α-olefins, such as ethylene, propylene, 1-butene, 1-pentene, 1-hexene, 1-heptene, and 1-octene; and hetero atom-substituted alkene compounds, such as vinyl pivalate, 1-phenylthioethene, and N-vinylpyrrolidone. The non-conjugated olefin compound may be used either alone or in combination of two or more thereof.

The non-conjugated olefin compound serving as a monomer of the multicomponent copolymer is preferably an acyclic non-conjugated olefin compound from the viewpoint of more improving the weather resistance of the rubber composition or the like using the obtained multicomponent copolymer. In addition, the acyclic non-conjugated olefin compound is more preferably an α-olefin, and still more preferably an α-olefin containing ethylene, and it is especially preferably composed only of ethylene. In other words, the non-conjugated olefin unit in the multicomponent copolymer is preferably an acyclic non-conjugated olefin unit, and the acyclic non-conjugated olefin unit is more preferably an α-olefin unit, and still more preferably an α-olefin unit containing an ethylene unit, and it is especially preferably composed only of an ethylene unit. In addition, as for such a non-conjugated olefin unit, when combined with the other units, the durability of the rubber composition or the like using the multicomponent copolymer is readily improved.

The content of the non-conjugated olefin unit of the multicomponent copolymer is preferably 40 mol% or more, more preferably 45 mol% or more, still more preferably 55 mol% or more, and yet still more preferably 60 mol% or more, and an upper limit thereof is preferably 98 mol% or less, more preferably 95 mol% or less, and still more preferably 90 mol% or less. When the content of the non-conjugated olefin unit is 40 mol% or more relative to the whole of the multicomponent copolymer, the content of the conjugated diene unit or the aromatic vinyl unit consequently decreases, the weather resistance of the rubber composition or the like using the multicomponent copolymer is improved, and the fracture performance (in particular, tensile strength (Tb)) is improved. When the content of the non-conjugated olefin unit is 98 mol% or less, the content of the conjugated diene unit or the aromatic vinyl unit consequently increases, the fracture performance (in particular, tensile strength (Tb)) at a high temperature of the rubber composition or the like using the multicomponent copolymer is improved, and the durability of the rubber composition or the like using the multicomponent copolymer is readily improved through a combination with the other units. In addition, the content of the non-conjugated olefin unit is preferably in a range of 40 to 98 mol%, more preferably in a range of 45 to 95 mol%, and still more preferably in a range of 55 to 90 mol% relative to the whole of the multicomponent copolymer.

The aromatic vinyl unit is a structural unit derived from an aromatic vinyl compound serving as a monomer and improves the workability of the multicomponent copolymer. The "aromatic vinyl compound" as referred to herein means an aromatic compound which is at least substituted with a vinyl group, and it should be construed that the foregoing aromatic vinyl compound is not included in the conjugated diene compound.

The aromatic vinyl compound preferably has 8 to 10 carbon atoms. Examples of such an aromatic vinyl compound include styrene, o-methylstyrene, m-methylstyrene, p-methylstyrene, o,p-dimethylstyrene, o-ethylstyrene, methylstyrene, and p-ethylstyrene. The aromatic vinyl compound may be used either alone or in combination of two or more thereof. From the viewpoint of improving the weather resistance of the rubber composition or the like using the obtained multicomponent copolymer, the aromatic vinyl compound serving as a monomer of the multicomponent copolymer preferably contains styrene, and it is more preferably composed only of styrene. In other words, the aromatic vinyl unit in the multicomponent copolymer preferably contains a styrene unit, and it is more preferably composed only of a styrene unit. In addition, as for such an aromatic vinyl unit, when combined with the other units, the durability of the rubber composition or the like using the multicomponent copolymer is readily improved.

The aromatic ring in the aromatic vinyl unit is not contained in the main chain of the multicomponent copolymer so long as it does not bond to an adjacent unit.

The content of the aromatic vinyl unit of the multicomponent copolymer is preferably 1 mol% or more, and more preferably 3 mol% or more, and an upper limit thereof is preferably 35 mol% or less, more preferably 30 mol% or less, still more preferably 25 mol% or less, yet still more preferably 15 mol% or less, and especially preferably 10 mol% or less. When the content of the aromatic vinyl unit is 1 mol% or more, the durability, such as fracture performance, at a high temperature of the rubber composition or the like using the multicomponent copolymer is improved. When the content of the aromatic vinyl unit is 35 mol% or less, the effects owing to the conjugated diene unit and the non-conjugated olefin unit become remarkable, and the durability of the rubber composition or the like using the multicomponent copolymer is readily improved through a combination with the other units. In addition, the content of the aromatic vinyl unit is preferably in a range of 1 to 35 mol%, more preferably in a range of 3 to 30 mol%, and still more preferably 3 to 25 mol% relative to the whole of the multicomponent copolymer.

The number of kinds of the monomers of the multicomponent copolymer is not particularly restricted so long as the multicomponent copolymer contains the conjugated diene unit, the non-conjugated olefin unit, and the aromatic vinyl unit. Although the multicomponent copolymer may have other structural unit than the conjugated diene unit, the non-conjugated olefin unit, and the aromatic vinyl unit, from the viewpoint of obtaining the desired effects, the content of the other structural unit relative to the whole of the multicomponent copolymer is preferably 30 mol% or less, more preferably 20 mol% or less, and still more preferably 10 mol% or less, and especially preferably, the multicomponent copolymer does not contain the other structural unit, namely the content of the other structural unit is 0 mol%.

From the viewpoint of improving the durability of the rubber composition or the like using the multicomponent copolymer of the present embodiment and making the abrasion resistance, the weather resistance, and the crystallinity favorable, the multicomponent copolymer is preferably a polymer obtained through polymerization using at least, as monomers, only one conjugated diene compound, only one non-conjugated olefin compound, and only one aromatic compound. In other words, the multicomponent copolymer is preferably a multicomponent copolymer containing only one conjugated diene unit, only one non-conjugated olefin unit, and only one aromatic vinyl unit, more preferably a ternary copolymer composed only of only one conjugated diene unit, only one non-conjugated olefin unit, and only one aromatic vinyl unit, and still more preferably a ternary copolymer composed only of an isoprene unit, an ethylene unit, and a styrene unit. Here, conjugated diene units of a different binding mode from each other are included in the "only one conjugated diene unit".

In the multicomponent copolymer, it is preferred that the content of the conjugated diene unit is 1 to 50 mol%, the content of the non-conjugated olefin unit is 40 to 98 mol%, and the content of the aromatic vinyl unit is 1 to 35 mol%. In this case, the durability, such as fracture performance, and the weather resistance of the rubber composition or the like using the multicomponent copolymer are improved, and when applied to a tire, the durability, such as fracture performance, of the tire can be improved.

In the multicomponent copolymer of the present embodiment, the vinyl bond amount of the conjugated diene unit is required to be 3% or more. When the vinyl bond amount is less than 3%, the multicomponent copolymer of the present embodiment does not become one capable of developing high durability. From the viewpoint of improving the durability, the vinyl bond amount of the conjugated diene unit is preferably 7% or more, more preferably 9% or more, and still more preferably 10% or more. In addition, though an upper limit thereof is not particularly restricted, it is typically 65% or less, preferably 60% or less, more preferably 40% or less, and still more 20% or less.

Here, the vinyl bond amount of the conjugated diene unit is determined according to an infrared method (Morello method).

Although the vinyl bond is typically a 1,2-bond, it may contain a 3,4-bond. In the present invention, in the case where the vinyl bond contains a 3,4-bond, the vinyl bond amount is a total amount of the 1,2-bond and the 3,4-bond. In addition, a ratio of the 1,2-bond and the 3,4-bond as (1,2-bond/3,4-bond) is preferably (100 to 50)/(0 to 50), and more preferably (100 to 80)/(0 to 20) in terms of (1,2-bond)/(3,4-bond), and it is still more preferably 100/0, namely, the whole amount is the 1,2-bond.

A weight average molecular weight (Mw) of the multicomponent copolymer as expressed in terms of polystyrene is preferably 10,000 to 10,000,000, more preferably 100,000 to 9,000,000, and still more preferably 130,000 to 8,000,000. A number average molecular weight (Mn) of the multicomponent copolymer as expressed in terms of polystyrene is preferably 10,000 to 10,000,000, more preferably 50,000 to 9,000,000, and still more preferably 70,000 to 8,000,000. In addition, a molecular weight distribution [Mw/Mn {(weight average molecular weight)/(number average molecular weight)}] of the multicomponent copolymer is preferably 1.00 to 4.00, more preferably 1.50 to 3.50, and still more preferably 1.60 to 3.00.

When the lower limits of Mw and Mn of the multicomponent copolymer fall within the aforementioned ranges, the mechanical strength and the durability, such as fracture performance, of the rubber composition or the like can be improved, and when the upper limits fall within the aforementioned ranges, the high workability can be maintained. In addition, when the molecular weight distribution of the multicomponent copolymer is 4.00 or less, sufficient homogeneity can be brought for physical properties of the multicomponent copolymer.

Here, the weight average molecular weight (Mw), the number average molecular weight (Mn), and the molecular weight distribution (Mw/Mn) can be determined through gel permeation chromatography (GPC) using polystyrene as a standard substance. Detailed measurement methods thereof may be, for example, performed according to the methods as described in the section of Examples.

A glass transition temperature (Tg) of the multicomponent copolymer as measured with a differential scanning calorimeter (DSC) is preferably 0°C or lower, and more preferably -10°C or lower, and a lower limit thereof is preferably -100°C or higher. When the glass transition temperature of the multicomponent copolymer is 0°C or lower, not only the durability of the rubber composition or the like is improved, but also the workability is improved.

Here, a detailed measurement method of the glass transition temperature may be, for example, performed according to the method as described in the section of Examples.

An endothermic peak energy at 0 to 120°C of the multicomponent copolymer as measured with a differential scanning calorimeter (DSC) is preferably 5 to 150 J/g, and more preferably 20 to 120 J/g. When the endothermic peak energy of the multicomponent copolymer is 5 J/g or more, the crystallinity of the multicomponent copolymer becomes high, the abrasion resistance of the rubber composition or the like using the multicomponent copolymer is more improved, and the durability after crosslinking can be more improved. In addition, when the endothermic peak energy of the multicomponent copolymer is 150 J/g or less, the workability of the rubber composition or the like is improved.

Here, specifically, the endothermic peak energy is defined as an endothermic peak energy on the occasion of using a differential scanning calorimeter (DSC, "DSC Q2000", manufactured by TA Instruments Japan Inc.), raising the temperature from -150°C to 150°C at a temperature rise rate of 10°C/min in conformity with JIS K7121-1987, and determining the energy at 0 to 120°C at that time (1st run).

A melting point of the multicomponent copolymer as measured with a differential scanning calorimeter (DSC) is preferably 30 to 130°C, and more preferably 30 to 110°C. When the melting point of the multicomponent copolymer is 30°C or higher, the crystallinity of the multicomponent copolymer becomes high, the abrasion resistance of the rubber composition or the like is more improved, and the durability after crosslinking can be more improved. In addition, when the melting point of the multicomponent copolymer is 130°C or lower, the workability of the rubber composition is improved.

Here, specifically, the melting point is defined as a melting point measured with a differential scanning calorimeter (DSC, "DSC Q2000", manufactured by TA Instruments Japan Inc.) in conformity with JIS K7121-1987.

A degree of crystallinity of the multicomponent copolymer is preferably 0.5 to 50%, more preferably 3 to 45%, and still more preferably 5 to 45%. When the degree of crystallinity of the multicomponent copolymer is 0.5% or more, the crystallinity to be caused owing to the non-conjugated olefin unit is sufficiently secured, and the durability, such as fracture performance, of the rubber composition or the like can be more improved. In addition, when the degree of crystallinity of the multicomponent copolymer is 50% or less, the workability on the occasion of kneading of the rubber composition or the like is improved, and tackiness of the rubber composition or the like having the multicomponent copolymer blended therein is improved. Thus, for example, the workability on the occasion when rubber members prepared from the rubber composition are stuck to each other, to form a rubber article, such as a tire, is improved, too.

Here, the degree of crystallinity is one calculated in the following manner. That is, the multicomponent copolymer is subjected to temperature rise from - 150°C to 150°C at a temperature rise rate of 10°C/min, to measure an endothermic peak energy (ΔH1); a crystal melting energy (ΔH0) of polyethylene of a 100% crystal component is measured in the same method; and the degree of crystallinity (%) derived from an ethylene unit (non-conjugated olefin unit) is calculated from a ratio (ΔH1/ΔH0) of the endothermic peak energy (ΔH1) of the multicomponent copolymer to the crystal melting energy (ΔH0) of polyethylene of a 100% crystal component. The endothermic peak energy of the multicomponent copolymer and the crystal melting energy of polyethylene are those measured with a differential scanning calorimeter (DSC, "DSC Q2000", manufactured by TA Instruments Japan Inc.).

As for the multicomponent copolymer, it is preferred that a main chain thereof is composed only of an acyclic structure. According to this, the abrasion resistance of the rubber composition or the like can be improved, and the durability after crosslinking can be improved.

For confirming whether or not the main chain of the multicomponent copolymer has a cyclic structure, NMR is adopted as a main measuring means. Specifically, in the case where peaks derived from the cyclic structure existing in the main chain (for example, peaks appearing at 10 to 24 ppm for three-membered to five-membered rings) are not observed, it indicates that the main chain of the multicomponent copolymer is composed only of an acyclic structure.

The multicomponent copolymer can be produced through a polymerization step of using, as monomers, a conjugated diene compound, a non-conjugated olefin compound, and an aromatic vinyl compound, and the multicomponent copolymer may be further produced through a coupling step, a washing step, or other step, as the need arises.

Here, in the production of the multicomponent copolymer, it is preferred that only the non-conjugated olefin compound and the aromatic vinyl compound are added and polymerized in the presence of a polymerization catalyst, without adding the conjugated diene compound. In particular, in the case of using a catalyst composition as mentioned later, in view of the fact that the conjugated diene compound is higher in reactivity than the non-conjugated olefin compound and the aromatic vinyl compound, it is liable to become difficult to polymerize the non-conjugated olefin compound and/or the aromatic vinyl compound in the presence of the conjugated diene compound. In addition, in view of characteristics of the catalyst, it is also liable to become difficult to polymerize the conjugated diene compound in advance and then additionally polymerize the non-conjugated olefin compound and the aromatic vinyl compound.

As the polymerization method, any arbitrary method, such as a solution polymerization method, a suspension polymerization method, a liquid phase bulk polymerization method, an emulsion polymerization method, a vapor phase polymerization method, and a solid phase polymerization method, can be adopted. In addition, in the case of using a solvent for the polymerization reaction, the solvent may be any one that is inert in the polymerization reaction, and examples thereof include toluene, cyclohexane, and normal hexane.

The polymerization step may be performed in a single stage or may be performed in multistage of two or more stages.

The single-stage polymerization step is a step of polymerizing all kinds of the monomers to be polymerized, namely, the conjugated diene compound, the non-conjugated olefin compound, the aromatic vinyl compound, and other monomer, and preferably the conjugated diene compound, the non-conjugated olefin compound, and the aromatic vinyl compound all at once. In addition, the multistage polymerization step of two or more stages is a step of first reacting a part or all of one or two kinds of monomers to form a polymer (first polymerization stage), and subsequently adding the remaining monomer or monomers or the remaining part of the former one or two kinds of monomers and polymerizing them in one or more stages (second polymerization stage to final polymerization stage). In particular, in the production of the multicomponent copolymer, it is preferred to perform the polymerization step in multistage.

In the polymerization step, it is preferred that the polymerization reaction is performed in an atmosphere of an inert gas, preferably a nitrogen gas or an argon gas. Although the polymerization temperature of the polymerization reaction is not particularly restricted, for example, it is preferably in a range of - 100°C to 200°C, and may be room temperature or so. In addition, the pressure of the polymerization reaction is preferably in a range of 0.1 to 10.0 MPa for the purpose of sufficiently taking the conjugated diene compound into the polymerization reaction system. In addition, the reaction time of the polymerization reaction is not particularly restricted, too, and for example, it is preferably in a range of 1 second to 10 days. But, the reaction time can be appropriately selected depending on the kind of the polymerization catalyst and the condition of the polymerization temperature, etc.

In the polymerization step of the conjugated diene compound, the polymerization may be terminated using a polymerization terminator, such as methanol, ethanol, and isopropanol.

The polymerization step is preferably performed in multistage. More preferably, it is preferred to carry out a first step of mixing a first monomer raw material containing at least an aromatic vinyl compound and a polymerization catalyst to obtain a polymerization mixture; and a second step of introducing a second monomer raw material containing at least one selected from a conjugated diene compound, a non-conjugated olefin compound, and an aromatic vinyl compound into the polymerization mixture. Furthermore, it is more preferred that not only the first monomer raw material does not contain a conjugated diene compound, but also the second monomer raw material contains a conjugated diene compound.

The first monomer raw material which is used in the first step may contain a non-conjugated olefin compound together with the aromatic vinyl compound. In addition, the first monomer raw material may contain the whole amount of the aromatic vinyl compound to be used or may contain only a part thereof. In addition, the non-conjugated olefin compound is contained in at least one of the first monomer raw material and the second monomer raw material.

It is preferred that the first step is performed in a reactor in an atmosphere of an inert gas, preferably a nitrogen gas or an argon gas. Although the temperature (reaction temperature) in the first step is not particularly restricted, for example, it is preferably in a range of -100°C to 200°C, and may be room temperature or so. In addition, though the pressure in the first step is not particularly restricted, it is preferably in a range of 0.1 to 10.0 MPa for the purpose of sufficiently taking the aromatic vinyl compound into the polymerization reaction system. In addition, though the time (reaction time) to be spent for the first step can be appropriately selected depending on the kind of the polymerization catalyst and the condition of the reaction temperature, etc., for example, in the case of setting the reaction temperature to 25 to 80°C, the reaction time is preferably in a range of 5 minutes to 500 minutes.

In the first step, as the polymerization method for obtaining the polymerization mixture, any arbitrary method, such as a solution polymerization method, a suspension polymerization method, a liquid phase bulk polymerization method, an emulsion polymerization method, a vapor phase polymerization method, and a solid phase polymerization method, can be adopted. In addition, in the case of using a solvent for the polymerization reaction, the solvent may be any one that is inert in the polymerization reaction, and examples thereof include toluene, cyclohexane, and normal hexane.

The second monomer raw material which is used in the second step is preferably only a conjugated diene compound, or a conjugated diene compound and a non-conjugated olefin compound, or a conjugated diene compound and an aromatic vinyl compound, or a conjugated diene compound, a non-conjugated olefin compound, and an aromatic vinyl compound.

In the case where the second monomer raw material contains at least one selected from a non-conjugated olefin compound and an aromatic vinyl compound in addition to a conjugated diene compound, these monomer raw materials may be mixed in advance along with a solvent or the like and then introduced into the polymerization mixture, or each monomer raw material may be introduced thereinto in the form of a single state. In addition, the respective monomer raw materials may be added at the same time, or may be added successively. In the second step, though a method of introducing the second monomer raw material into the polymerization mixture is not particularly restricted, it is preferred to continuously add the respective monomer raw materials to the polymerization mixture while controlling the flow rate of each monomer raw material (in a so-called metering mode). Here, in the case of using a monomer raw material that is a gas under a condition of the polymerization reaction system (for example, ethylene or the like as the non-conjugated olefin compound under a condition at room temperature and an atmospheric pressure), it can be introduced into the polymerization reaction system under a predetermined pressure.

It is preferred that the second step is performed in a reactor in an atmosphere of an inert gas, preferably a nitrogen gas or an argon gas. Although the temperature (reaction temperature) in the second step is not particularly restricted, for example, it is preferably in a range of -100°C to 200°C, and may be room temperature or so. When the reaction temperature is raised, the selectivity of a cis-1,4-bond in the conjugated diene unit may be occasionally lowered. In addition, though the pressure in the second step is not particularly restricted, it is preferably in a range of 0.1 to 10.0 MPa for the purpose of sufficiently taking the monomer, such as a conjugated diene compound, into the polymerization reaction system. In addition, though the time (reaction time) to be spent for the second step can be appropriately selected depending on the kind of the polymerization catalyst and the condition of the reaction temperature, etc., for example, it is preferably in a range of 0.1 hours to 10 days.

In the second step, the polymerization reaction may be terminated using a polymerization terminator, such as methanol, ethanol, and isopropanol.

Preferably, the aforementioned polymerization step of a conjugated diene compound, a non-conjugated olefin compound, and an aromatic vinyl compound includes a step of polymerizing the respective monomers in the presence of at least one catalyst component selected from the following components (A) to (F). In the polymerization step, it is preferred to use at least one of the following components (A) to (F), and it is more preferred to combine two or more of the following components (A) to (F) and use them as a catalyst composition. In the present embodiment, the following components (A) to (F) can be used in the polymerization step by, for example, making WO 2018/092733 A or the like as a reference.
Component (A): A rare earth element compound or a reaction product of the rare earth element compound and a Lewis base
Component (B): An organic metal compound
Component (C): An aluminoxane
Component (D): An ionic compound
Component (E): A halogen compound
Component (F): A cyclopentadiene skeleton-containing compound selected from a substituted or unsubstituted cyclopentadiene (a compound having a cyclopentadienyl group), a substituted or unsubstituted indene (a compound having an indenyl group), and a substituted or unsubstituted fluorene (a compound having a fluorenyl group)

The coupling step is a step of performing a reaction for modifying (coupling) at least a part (for example, the terminal) of the polymer chain of the multicomponent copolymer obtained in the polymerization step.

In the coupling step, the coupling reaction is preferably performed on the occasion when the polymerization reaction has reached 100%.

A coupling agent which is used for the coupling reaction is not particularly restricted and can be appropriately selected depending on the intended purpose. Examples thereof include a tin-containing compound, such as bis(maleic acid-1-octadecyl)dioctyltin(IV); an isocyanate compound, such as 4,4'-diphenylmethane diisocyanate; and an alkoxysilane compound, such as glycidylpropyltrimethoxysilane. These may be used either alone or in combination of two or more thereof. Of these, bis(maleic acid-1-octadecyl)dioctyltin(IV) is preferred from the standpoint of reaction efficiency and low gel formation.

The coupling reaction is able to increase the number average molecular weight (Mn).

The washing step is a step of washing the multicomponent copolymer obtained in the polymerization step.

A medium to be used for washing is not particularly restricted and can be appropriately selected depending on the intended purpose. Examples thereof include methanol, ethanol, and 2-propanol. On the occasion of using a catalyst derived from a Lewis acid as the polymerization catalyst, in particular, an acid (for example, hydrochloric acid, sulfuric acid, and nitric acid) can be added to such a solvent and used. The amount of the acid to be added is preferably 15 mol% or less relative to the solvent. When the amount of the acid is 15 mol% or less, an adverse influence against kneading and reaction at the time of vulcanization to be caused due to the matter that the acid remains in the multicomponent copolymer can be prevented from occurring.

In the washing step, the residual amount of the catalyst in the multicomponent copolymer can be suitably lowered.

In view of the fact that the multicomponent copolymer of the present embodiment develops high durability, it is suitably used for a rubber composition and a resin composition as mentioned later. Especially, in view of the fact that the rubber composition using the multicomponent copolymer of the present embodiment has high durability, it is suitably used for rubber products, such as conveyor belts, rubber crawlers, hoses, vibration-proofing rubbers used for vibration-proofing devices or seismic isolators, and seismic isolation rubbers, in addition to tires.

### [Rubber Composition]

The rubber composition of the present embodiment is one containing a rubber component containing the aforementioned multicomponent copolymer of the present embodiment.

### (Rubber Component)

The rubber component to be contained in the rubber composition of the present embodiment is one containing the aforementioned multicomponent copolymer of the present embodiment. In the rubber component, the multicomponent copolymer of the present embodiment can be combined with other rubber component and used. As the other rubber component, for example, natural rubber (NR), such as RSS and TSR and besides, modified natural rubber, e.g., high-purity natural rubber, epoxidized natural rubber, hydroxylated natural rubber, hydrogenated natural rubber, and grafted natural rubber; and other rubber component, such as butadiene rubber (BR), styrene butadiene rubber (SBR), acrylonitrile-butadiene rubber (NBR), chloroprene rubber, ethylene-propylene rubber (EPM), ethylene-propylene-non-conjugated diene rubber (EPDM), polysulfide rubber, silicone rubber, fluororubber, and urethane rubber may be contained. These rubber components can be used either alone or in combination of two or more thereof.

As the butadiene rubber (BR), high cis-polybutadiene rubber can be contained taking into consideration the improvement of abrasion resistance. The high cis-polybutadiene rubber means high cis-polybutadiene rubber in which the cis-1,4-bond content in the 1,3-butadiene unit is 90% or more and 99% or less in the measurement according to FT-IR. The cis-1,4-bond content in the 1,3-butadiene unit of the high cis-polybutadiene rubber is preferably 95% or more and 99% or less.

A production method of the high cis-polybutadiene rubber is not particularly limited, and the high cis-polybutadiene rubber may be produced by a known method. Examples of the production method include a method of polymerizing butadiene using a neodymium-based catalyst.

The high cis-polybutadiene rubber is commercially available, and examples thereof include "BR01" and "T700" (all of which are manufactured by JSR Corporation) and "UBEPOL BR150L" (manufactured by Ube Industries, Ltd.).

From the viewpoint of surely obtaining an effect for developing the durability, the content of the multicomponent copolymer of the present embodiment in the rubber component is preferably 50% by mass or more, more preferably 70% by mass or more, still more preferably 90% by mass or more, and yet still more preferably 100% by mass, namely, the whole is the multicomponent copolymer.

### (Filler)

It is preferred that the rubber composition of the present embodiment further contains a filler. When the filler is contained, the durability, the reinforcing performance, and the like are improved. Examples of the filler include silica, carbon black, aluminum oxide, clay, alumina, talc, mica, kaolin, glass balloons, glass beads, calcium carbonate, magnesium carbonate, magnesium hydroxide, calcium carbonate, magnesium oxide, titanium oxide, potassium titanate, and barium sulfate. The filler may be used either alone or in combination of two or more thereof. From the viewpoint of improving the dispersibility in the multicomponent copolymer, at least one selected from silica and carbon black is preferably contained as the filler.

The carbon black is not particularly restricted, and examples thereof include carbon blacks of SAF, ISAF, HAF, FF, FEF, GPF, SRF, CF, FT, and MT grades. The carbon black may be used either alone or in combination of two or more thereof. Of these, carbon blacks of SAF, ISAF, and HAF grades are preferred as the carbon black.

The silica is not particularly restricted, and examples thereof include wet method silica, dry method silica, and colloidal silica. The silica may be used either alone or in combination of two or more thereof. Of these, wet method silica is preferred as the silica.

The content of the filler in the rubber composition of the present embodiment is preferably 30 to 100 parts by mass based on 100 parts by mass of the rubber component. When the aforementioned content is 30 parts by mass or more, the durability and the abrasion resistance can be more improved, and when it is 100 parts by mass or less, the low hysteresis loss and the high elastic modulus can be favorably maintained.

In the case of using silica as the filler, it is preferred that the rubber composition of the present embodiment contains a silane coupling agent from the viewpoint of improving the blending effect of silica. Examples of the silane coupling agent include vinyltriethoxysilane, vinyltris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropyltrimethoxysilane, γ-aminopropyltriethoxysilane, N-β-(aminoethyl)-γ-aminopropyltrimethoxysilane, bis-triethoxysilylpropyltetrasulfide, and bis-triethoxysilylpropyldisulfide. These silane coupling agents may be used either alone or in combination of two or more thereof.

Although the content thereof is not particularly restricted, it is preferably 1 to 12% by mass, and more preferably 3 to 10% by mass relative to the content of silica of the filler. When the content of the silane coupling agent is 1% by mass or more relative to the content of silica of the filler, the effect for improving the dispersibility of the filler is readily obtained, whereas when it is 12% by mass or less, excessive blending of the silane coupling agent is inhibited, and the addition effect is efficiently obtained, and therefore, such is economically advantageous.

### (Other Components)

The rubber composition of the present embodiment can appropriately contain components, such as a crosslinking agent (inclusive of a vulcanizing agent, such as sulfur), a crosslinking accelerator (vulcanization accelerator), a crosslinking accelerator aid (vulcanization accelerator aid), an anti-aging agent, zinc white (ZnO), a softener, a wax, an antioxidant, a blowing agent, a plasticizer, a lubricant, a tackifier, a petroleum-based resin, an ultraviolet absorber, a dispersant, a compatibilizing agent, and a homogenizing agent, within a range where the effects of the present invention are not impaired, as the need arises.

In view of the fact that the rubber composition of the present embodiment has high durability, it is suitably used for rubber products, such as tires as mentioned later and besides, conveyor belts, rubber crawlers, hoses, vibration-proofing rubbers used for vibration-proofing devices or seismic isolators, and seismic isolation rubbers.

### (Production of Rubber Composition)

The rubber composition of the present embodiment can be produced by kneading the aforementioned respective components using a kneading machine, such as a Banbury mixer, a roll, and an internal mixer. Here, on the occasion of blending and kneading, all the components may be blended and kneaded at once, and the respective components may be blended and kneaded while being divided into multiple stages, such as two stages and three stages. On the occasion of kneading, a kneading machine, such as a roll, an internal mixer, and a Banbury mixer, can be used. Furthermore, on the occasion of forming the rubber composition in a sheet-like or stripe-like shape or the like, a known molding machine, such as an extrusion molding machine and a press machine, can be used.

The rubber composition of the present embodiment may be produced through crosslinking. A crosslinking condition is not particularly restricted, and typically, a condition at a temperature of 140 to 180°C for a time of 5 to 120 minutes can be adopted.

### [Resin Composition and Resin Product]

The resin composition of the present embodiment is one containing the aforementioned multicomponent copolymer of the present embodiment. When the multicomponent copolymer is combined with other resin component, various performances which the other resin component originally has, such as durability and impact resistance, are improved. In addition, the resin product of the present embodiment is one using the resin composition of the present embodiment.

The resin component to be combined with the multicomponent copolymer is not particularly restricted, and various resin components can be adopted and may be appropriately selected depending on a performance required for the resin product. Examples of such a resin component include polyolefin resins, such as homopolymers, e.g., polyethylene, polypropylene, polybutene, and polystyrene, copolymers, e.g., an ethylene-propylene copolymer, an ethylene-methacrylic acid copolymer, an ethylene-ethyl acrylate copolymer, an ethylene-propylene-diene ternary copolymer, and an ethylene-vinyl acetate copolymer, and ionomer resins thereof; polyvinyl alcohol resins, such as a vinyl alcohol homopolymer and an ethylene-vinyl alcohol copolymer; poly(meth)acrylic acid resins and ester resins thereof; polyamide resins, such as an aliphatic polyamide resin and an aromatic polyamide resin; and a polyethylene glycol resin, a carboxy vinyl copolymer, a styrene-maleic acid copolymer, polyvinylpyrrolidone resins, e.g., a vinylpyrrolidone homopolymer, and a vinylpyrrolidone-vinyl acetate copolymer, a polyester resin, a cellulose resin, mercaptomethanol, hydrogenated styrene-butadiene, syndiotactic polybutadiene, trans polyisoprene, and trans polybutadiene.

In the resin composition of the present embodiment, the content of the multicomponent copolymer relative to all the resin components may be appropriately adjusted depending on other resin to be combined, desired properties, and the like, and it is typically about 1 to 99% by mass, and preferably 5 to 90% by mass.

The resin composition of the present embodiment can contain various additives depending on a desired performance. As the various additives, additives which are typically contained in resin compositions can be used without particular restrictions. Examples thereof include a weathering agent, such as an ultraviolet absorber and a light stabilizer, an antioxidant, a filler exemplified above as the filler which may be contained in the rubber composition, a softener, a coloring agent, a flame retarder, a plasticizer, and an antistatic agent.

### [Tire]

The tire of the present embodiment is one using the aforementioned rubber composition of the present embodiment. Such a tire is one using the rubber composition of the present embodiment, and therefore, it has high durability.

A site of the tire to which the rubber composition of the present embodiment is applied is not particularly restricted and can be appropriately selected depending on the intended purpose. Examples thereof include a tread, a base tread, a side wall, a side-reinforcing rubber, and a bead filler. From the viewpoint of effectively utilizing an excellent effect such that the rubber composition of the present embodiment has high durability, the application site is preferably a tread, and especially preferably a tread of studless tire.

As a method of producing the tire of the present embodiment, any customary method is adoptable. For example, members which are generally used in the tire production, such as a carcass layer, a belt layer, and a tread layer, each of which is formed of an unvulcanized rubber composition of the present embodiment and/or a code, are successively stuck and laid on a drum for tire formation, and then, the drum is removed off to give a green tire. Subsequently, the green tire is vulcanized under heating according to an ordinary method, whereby a desired tire (for example, a pneumatic tire) can be produced.

### Examples

The present invention is hereunder described in more detail by reference to Examples, but it should be construed that the present invention is not limited to the following Examples.

### (Analysis of Multicomponent Copolymer)

With respect to the multicomponent copolymer, the vinyl bond amount of conjugated diene unit, the number average molecular weight (Mn), the weight average molecular weight (Mw), the molecular weight distribution (Mw/Mn), the contents of conjugated diene unit (isoprene unit), non-conjugated olefin unit (ethylene unit), and aromatic vinyl unit (styrene unit), and the glass transition temperature (Tg) were measured by the following methods.

(1) Vinyl bond amount of conjugated diene unit:
   The vinyl bond amount was determined according to an infrared method (Morello method).
(2) Number average molecular weight (Mn), weight average molecular weight (Mw), and molecular weight distribution (Mw/Mn):
   The number average molecular weight (Mn), the weight average molecular weight (Mw), and the molecular weight distribution (Mw/Mn) of the copolymer as expressed in terms of polystyrene were determined on a basis of monodispersed polystyrene through gel permeation chromatography (GPC) [GPC: HLC-8121GPC/HT, manufactured by Tosoh corporation, column: two columns of GMH_{HR}-H(S)HT, manufactured by Tosoh Corporation, detector: differential refractometer (RI)]. The measurement temperature is 40°C.
(3) Contents of conjugated diene unit, non-conjugated olefin unit, and aromatic vinyl unit:
   The contents (mol%) of the conjugated diene unit (isoprene unit or butadiene unit), the non-conjugated olefin unit (ethylene unit), and the aromatic vinyl unit (styrene unit) in the copolymer were determined from integral ratios of the respective peaks in the ¹H-NMR spectrum (100°C, d-tetrachloroethane standard: 6 ppm).
(4) Glass transition temperature (Tg):
   The glass transition temperature (Tg) of the copolymer was measured with a differential scanning calorimeter (DSC, "DSC Q2000", manufactured by TA Instruments Japan Inc.) in conformity with JIS K7121-1987.
(5) Measurement of tensile strength:
   Using a JIS No. 7 dumbbell-shaped sample having a thickness of 2 mm, the tensile strength (Tb (MPa)) was measured at 23°C under a condition at a tensile speed of 200 mm/mm in conformity with "Rubber, vulcanized or thermoplastic-Determination of tensile stress-strain properties" as prescribed in JIS K6251:2004.

### (Example 1: Production of Multicomponent Copolymer 1)

40 g of styrene as an aromatic vinyl compound, 70 g of a toluene solution containing 16 g of isoprene, and 670 g of toluene were added in a fully-dried 2,000-mL pressure-tight stainless steel reactor.

In a glove box in a nitrogen atmosphere, 0.075 mmol of a ((1-benzyldimethylsilyl-3-methyl)indenyl)bis(bis(dimethylsilyl)amide)gadolinium complex ([1-benzyldimethyl-3-methylSi]₂C₉H₅Gd[N(SiHMe₂)₂]₂), 0.075 mmol of trityl tetrakis(pentafluorophenyl)borate [Ph₃CB(C₆F₅)₄], and 0.6 mmol of triisobutylaluminum were charged in a glass-made container, and 30 mL of toluene was added, to give a catalyst solution. The obtained catalyst solution was added to the pressure-tight stainless steel reactor, followed by heating at 75°C.

Subsequently, ethylene was put into the pressure-tight stainless steel reactor under a pressure of 1.5 MPa to undergo copolymerization at 75°C for 4 hours in total.

Subsequently, 1 mL of an isopropanol solution containing 5% by mass of 2,2'-methylene-bis(4-ethyl-6-t-butylphenol) (NS-5) was added to the pressure-tight stainless steel reactor to terminate the reaction.

Subsequently, the copolymer was separated using a large amount of methanol and then dried in vacuo at 50°C to give a multicomponent copolymer 1.

With respect to the obtained multicomponent copolymer 1, the vinyl bond amount of conjugated diene unit, the number average molecular weight (Mn), the weight average molecular weight (Mw), the molecular weight distribution (Mw/Mn), the contents of conjugated diene unit (isoprene unit), non-conjugated olefin unit (ethylene unit), and aromatic vinyl unit (styrene unit), and the glass transition temperature (Tg) were measured by the aforementioned methods. The results are shown in Table 1. In the multicomponent copolymer 1, the vinyl bonds were all a 1,2-bond, and the vinyl bond amount was the same as the 1,2-bond amount.

The obtained multicomponent copolymer 1 was measured for the ¹³C-NMR spectrum. As a result, any peak was not observed at 10 to 24 ppm, and therefore, it was confirmed that in the multicomponent copolymer 1, the main chain was composed only of an acyclic structure.

Using the obtained multicomponent copolymer 1, a rubber composition was prepared in a blending formulation shown in the following Table 2 and vulcanized at 160°C for 30 minutes to give a vulcanized rubber, which was then measured for the tensile strength (Tb) by the aforementioned method. The measurement results are shown in Table 1. In addition, in Table 1, an index was expressed along with the aforementioned measured value while making a measured value of Comparative Example 2 as 100. It is indicated that the larger the index, the higher the durability is.

### (Example 2: Production of Multicomponent Copolymer 2)

74 g of styrene as an aromatic vinyl compound, 100 g of a toluene solution containing 21 g of isoprene, and 500 g of toluene were added in a fully-dried 2,000-mL pressure-tight stainless steel reactor.

In a glove box in a nitrogen atmosphere, 0.075 mmol of a ((1-benzyldimethylsilyl-3-methyl)indenyl)bis(bis(dimethylsilyl)amide)gadolinium complex ([1-benzyldimethyl-3-methylSi]₂C₉H₅Gd[N(SiHMe₂)₂]₂), 0.075 mmol of trityl tetrakis(pentafluorophenyl)borate [Ph₃CB(C₆F₅)₄], and 0.3 mmol of triisobutylaluminum were charged in a glass-made container, and 30 mL of toluene was added, to give a catalyst solution. The obtained catalyst solution was added to the pressure-tight stainless steel reactor, followed by heating at 75°C.

Subsequently, ethylene was put into the pressure-tight stainless steel reactor under a pressure of 1.5 MPa to undergo copolymerization at 75°C for 4 hours in total.

Subsequently, 1 mL of an isopropanol solution containing 5% by mass of 2,2'-methylene-bis(4-ethyl-6-t-butylphenol) (NS-5) was added to the pressure-tight stainless steel reactor to terminate the reaction.

Subsequently, the copolymer was separated using a large amount of methanol and then dried in vacuo at 50°C to give a multicomponent copolymer 2.

With respect to the obtained multicomponent copolymer 2, the vinyl bond amount of conjugated diene unit, the number average molecular weight (Mn), the weight average molecular weight (Mw), the molecular weight distribution (Mw/Mn), the contents of conjugated diene unit (isoprene unit), non-conjugated olefin unit (ethylene unit), and aromatic vinyl unit (styrene unit), and the glass transition temperature (Tg) were measured by the aforementioned methods. The results are shown in Table 1. In the multicomponent copolymer 2, the vinyl bonds were all a 1,2-bond, and the vinyl bond amount was the same as the 1,2-bond amount.

The obtained multicomponent copolymer 2 was measured for the ¹³C-NMR spectrum. As a result, any peak was not observed at 10 to 24 ppm, and therefore, it was confirmed that in the multicomponent copolymer 2, the main chain was composed only of an acyclic structure.

Using the obtained multicomponent copolymer 2, a rubber composition was prepared in a blending formulation shown in the following Table 2 and vulcanized at 160°C for 30 minutes to give a vulcanized rubber, which was then measured for the tensile strength (Tb) by the aforementioned method. The measurement results are shown in Table 1. In addition, in Table 1, an index was expressed along with the aforementioned measured value while making a measured value of Comparative Example 2 as 100.

### (Comparative Example 1: Production of Multicomponent Copolymer 3)

100 g of styrene as an aromatic vinyl compound, 65 g of a toluene solution containing 16 g of 1,3-butadiene, and 500 g of toluene were added in a fully-dried 2,000-mL pressure-tight stainless steel reactor.

In a glove box in a nitrogen atmosphere, 0.075 mmol of a mono(bis(1,3-tertbutyldimethylsilyl)indenyl)bis(bis) (dimethylsilyl) amide) gadolinium complex (1,3-[(tert-Bu)Me₂Si]₂C₉H₅Gd[N(SiHMe₂)₂]₂), 0.075 mmol of trityl tetrakis(pentafluorophenyl)borate [Ph₃CB(C₆F₅)₄], and 1.9 mmol of triisobutylaluminum were charged in a glass-made container, and 34 mL of toluene was added, to give a catalyst solution. The obtained catalyst solution was added to the pressure-tight stainless steel reactor, followed by heating at 75°C.

Subsequently, ethylene was put into the pressure-tight stainless steel reactor under a pressure of 1.5 MPa to undergo copolymerization at 75°C for 4 hours in total.

Subsequently, 1 mL of an isopropanol solution containing 5% by mass of 2,2'-methylene-bis(4-ethyl-6-t-butylphenol) (NS-5) was added to the pressure-tight stainless steel reactor to terminate the reaction.

Subsequently, the copolymer was separated using a large amount of methanol and then dried in vacuo at 50°C to give a multicomponent copolymer 3.

With respect to the obtained multicomponent copolymer 3, the vinyl bond amount of conjugated diene unit, the number average molecular weight (Mn), the weight average molecular weight (Mw), the molecular weight distribution (Mw/Mn), the contents of conjugated diene unit (isoprene unit), non-conjugated olefin unit (ethylene unit), and aromatic vinyl unit (styrene unit), and the glass transition temperature (Tg) were measured by the aforementioned methods. The results are shown in Table 1.

Using the obtained multicomponent copolymer 3, a rubber composition was prepared in a blending formulation shown in the following Table 2 and vulcanized at 160°C for 30 minutes to give a vulcanized rubber, which was then measured for the tensile strength (Tb) by the aforementioned method. The measurement results are shown in Table 1. In addition, in Table 1, an index was expressed along with the aforementioned measured value while making a measured value of Comparative Example 2 as 100.

### (Comparative Example 2: Production of Multicomponent Copolymer 4)

200 g of styrene as an aromatic vinyl compound, 60 g of a toluene solution containing 15 g of 1,3-butadiene, and 300 g of toluene were added in a fully-dried 2,000-mL pressure-tight stainless steel reactor.

In a glove box in a nitrogen atmosphere, 0.250 mmol of a mono(bis(1,3-tertbutyldimethylsilyl)indenyl)bis (bis) (dimethylsilyl) amide) gadolinium complex (1,3-[(tert-Bu)Me₂Si]₂CgH₅Gd[N(SiHMe₂)₂]₂), 0.250 mmol of trityl tetrakis(pentafluorophenyl)borate [Ph₃CB(C₆F₅)₄], and 1.4 mmol of triisobutylaluminum were charged in a glass-made container, and 95 mL of toluene was added, to give a catalyst solution. The obtained catalyst solution was added to the pressure-tight stainless steel reactor, followed by heating at 75°C.

Subsequently, ethylene was put into the pressure-tight stainless steel reactor under a pressure of 1.5 MPa to undergo copolymerization at 75°C for 6 hours in total.

Subsequently, 1 mL of an isopropanol solution containing 5% by mass of 2,2'-methylene-bis(4-ethyl-6-t-butylphenol) (NS-5) was added to the pressure-tight stainless steel reactor to terminate the reaction.

Subsequently, the copolymer was separated using a large amount of methanol and then dried in vacuo at 50°C to give a multicomponent copolymer 4.

With respect to the obtained multicomponent copolymer 4, the vinyl bond amount of conjugated diene unit, the number average molecular weight (Mn), the weight average molecular weight (Mw), the molecular weight distribution (Mw/Mn), the contents of conjugated diene unit (isoprene unit), non-conjugated olefin unit (ethylene unit), and aromatic vinyl unit (styrene unit), and the glass transition temperature (Tg) were measured by the aforementioned methods. The results are shown in Table 1.

Using the obtained multicomponent copolymer 4, a rubber composition was prepared in a blending formulation shown in the following Table 2 and vulcanized at 160°C for 30 minutes to give a vulcanized rubber, which was then measured for the tensile strength (Tb) by the aforementioned method. The measurement results are shown in Table 1. In addition, in Table 1, an index was expressed along with the aforementioned measured value while making a measured value of Comparative Example 2 as 100.

**Table 1**

| | | Example | | Comparative Example | |
|---|---|---|---|---|---|
| | | 1 | 2 | 1 | 2 |
| Number average molecular weight (Mn) | - | 76 × 10³ | 97 × 10³ | 77 × 10³ | 163 × 10³ |
| Weight average molecular weight (Mw) | - | 132 × 10³ | 215 × 10³ | 152 × 10³ | 399 × 10³ |
| Molecular weight distribution (Mw/Mn) | - | 1.7 | 2.2 | 2.0 | 2.4 |
| Content of conjugated diene unit | mol% | 3.8 | 2.7 | 5.0 | 10.0 |
| Content of non-conjugated olefin unit | mol% | 89.6 | 89.6 | 88.0 | 77.0 |
| Content of aromatic vinyl unit | mol% | 6.6 | 7.7 | 7.0 | 13.0 |
| Glass transition temperature (Tg) | °C | - | -21 | - | - |
| Vinyl bond amount | % | 10 | 11 | 1 | 2 |
| Tensile strength | MPa | 49 | 47 | 41 | 39 |
| (Index) | - | 126 | 121 | 105 | 100 |

**Table 2**

| Component | Parts by mass |
|---|---|
| Multicomponent copolymer | 100.0 |
| Process oil | 10.0 |
| Stearic acid | 2.0 |
| Anti-aging agent RD | 2.0 |
| Anti-aging agent 6PPD | 2.0 |
| Vulcanization accelerator DPG | 1.1 |
| Vulcanization accelerator DM | 1.6 |
| Vulcanization accelerator NS | 0.6 |
| Sulfur | 1.2 |

The respective components used in Table 2 are as follows.
- Multicomponent copolymer:
   The multicomponent copolymers 1 to 4 obtained in the respective Examples and Comparative Examples
- Anti-aging agent RD:
   2,2,4-Trimethyl-1,2-dihydroquinoline polymer
- Anti-aging agent 6PPD:
   N-Phenyl-N'-(1,3-dimethylbutyl)-p-phenylenediamine
- Vulcanization accelerator DPG:
   1,3 - Diphenylguanidine
- Vulcanization accelerator DM:
   Di-2-benzothiazolyldisulfide
- Vulcanization accelerator NS:
   N-t- Butyl-2-benzothiazylsulfenamide

It was confirmed from Table 1 that the multicomponent copolymer of the present embodiment develops the high durability. On the other hand, the copolymers of Comparative Examples 1 and 2 in which the content of the conjugated diene unit is less than 3% are low in the tensile strength. Thus, it could not be said that these copolymers may develop the high durability.

### Industrial Applicability

In accordance with the present invention, it is possible to provide a multicomponent copolymer capable of developing high durability, a rubber composition containing the multicomponent copolymer, a resin composition, a tire, and a resin product. In addition, in view of the fact that the rubber composition of the present embodiment has high durability, it is suitably useful for not only tires but also conveyor belts, rubber crawlers, hoses, vibration-proofing rubbers used for vibration-proofing devices or seismic isolators, and seismic isolation rubbers.

## Claims

1. A multicomponent copolymer comprising a conjugated diene unit, a non-conjugated olefin unit, and an aromatic vinyl unit, wherein the vinyl bond amount of the conjugated diene unit is 3% or more.

2. The multicomponent copolymer according to claim 1, wherein the content of the conjugated diene unit is 1 to 50 mol%, the content of the non-conjugated olefin unit is 40 to 98 mol%, and the content of the aromatic vinyl unit is 1 to 35 mol%.

3. The multicomponent copolymer according to claim 1 or 2, wherein the conjugated diene unit contains at least one selected from a 1,3-butadiene unit and an isoprene unit.

4. The multicomponent copolymer according to claim 1 or 2, wherein the conjugated diene unit is composed only of an isoprene unit.

5. The multicomponent copolymer according to any one of claims 1 to 4, wherein a main chain thereof is composed only of an acyclic structure.

6. The multicomponent copolymer according to any one of claims 1 to 5, wherein the non-conjugated olefin unit is an acyclic non-conjugated olefin unit.

7. The multicomponent copolymer according to claim 6, wherein the acyclic non-conjugated olefin unit is composed only of an ethylene unit.

8. The multicomponent copolymer according to any one of claims 1 to 7, wherein the aromatic vinyl unit contains a styrene unit.

9. The multicomponent copolymer according to any one of claims 1 to 8, wherein a glass transition temperature thereof is 0°C or lower.

10. The multicomponent copolymer according to any one of claims 1 to 9, wherein a degree of crystallinity thereof is 0.5 to 50%.

11. A rubber composition comprising a rubber component containing the multicomponent copolymer according to any one of claims 1 to 10.

12. A resin composition comprising the multicomponent copolymer according to any one of claims 1 to 10.

13. A tire using the rubber composition according to claim 11.

14. A resin product using the resin composition according to claim 12.
